(19) Europäisches Patentamt
European Patent Office
Office européen des brevets

(11) **EP 3 513 156 B1**

(12) **EUROPÄISCHE PATENTSCHRIFT**

(45) Veröffentlichungstag und Bekanntmachung des Hinweises auf die Patenterteilung:
**29.07.2020  Patentblatt 2020/31**

(21) Anmeldenummer: **17804048.1**

(22) Anmeldetag: **02.10.2017**

(51) Int Cl.:
*G01J 3/10* *(2006.01)*     *G01J 3/46* *(2006.01)*

(86) Internationale Anmeldenummer:
**PCT/DE2017/000327**

(87) Internationale Veröffentlichungsnummer:
**WO 2018/068776 (19.04.2018 Gazette 2018/16)**

(54) **FARBABMUSTERUNGSLEUCHTE**

COLOR MATCHING LIGHT

LAMPE D'ÉCHANTILLONNAGE DE COULEURS

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **14.10.2016  DE 102016012256**

(43) Veröffentlichungstag der Anmeldung:
**24.07.2019  Patentblatt 2019/30**

(73) Patentinhaber: **Oligo Lichttechnik GmbH**
**53773 Hennef (DE)**

(72) Erfinder: **BECKER, Joachim**
**38667 Bad Harzburg (DE)**

(74) Vertreter: **Castell, Klaus**
**Patentanwaltskanzlei**
**Liermann-Castell**
**Am Rurufer 2**
**52349 Düren (DE)**

(56) Entgegenhaltungen:
**DE-A1- 19 740 201     JP-A- 2010 218 991**
**US-B2- 8 592 748**

# EP 3 513 156 B1

**Beschreibung**

Die Erfindung betrifft eine Farbabmusterungsleuchte, aufweisend in drei, vier oder mehr verschiedene Gruppen aufgeteilte LED mit unterschiedlichen Wellenlängenbereichen des ausgestrahlten Lichts und mindestens eine Farbmischeinrichtung zur homogenen Vermischung des Lichts der in verschiedene Gruppen aufgeteilten LED.

Bei der Qualitätskontrolle der Lackierung oder allgemein der Farbgebung von industriell hergestellten Produkten ist man auch heute, im Zeitalter der Sensorik und objektiven Messbarkeit von spektraler Zusammensetzung von Licht, auf die subjektive Empfindung der Oberflächengestaltung durch einen Menschen angewiesen. Außer der spektralen Zusammensetzung des reflektierten Lichtes durch ein Objekt, welche die Farbe des Objekts maßgeblich beeinflusst, wird die Oberfläche und Farbgestaltung des Weiteren beeinflusst durch die Oberflächenbeschaffenheit des Objektes, durch die Transparenz der obersten Schichten der Oberfläche des Objektes, durch die Polarisation des reflektierten Lichtes und schließlich durch gewollte und ungewollte Lichtstreuung und Spiegelung des auftreffenden Lichtes durch in der Oberfläche des Objektes vorhandene Teilchen. Des Weiteren ist für den sichtbaren Farbeindruck von Lacken auch noch das Trägermaterial entscheidend und auch die Lackierrichtung.

Die Feinstruktur der Oberfläche und das mit Winkeländerung veränderliche Verhalten der Reflexionseigenschaften des Objektes können die durch einen Menschen subjektiv empfundene Farbgebung eines Objektes bei ansonsten identischen spektralen Reflexionseigenschaften des Objektes sehr erheblich variieren.

In Folge dessen ist es üblich, Farbabmusterungen von Objekten bei der Qualitätskontrolle in standardisiert beleuchteten Umgebungen durch einen geübten Fachmann einer Sichtkontrolle zu unterziehen. Hierzu kommen standardisierte Leuchten mit standardisierten Lampen zum Einsatz, wie sie als D65 oder TL84 nach DIN 6173 bekannt sind. Bei der Sichtkontrolle prüft ein Kontrolleur die Farbtreue anhand von Referenzobjekten und eine Vielzahl von Reflexions- und Spiegelungseffekten, die für den Farbgebungsprozess, wie zum Beispiel die Lackierung des Objektes, typisch sind. Des Weiteren werden die Oberflächeneigenschaften von Lacken innerhalb eines Objektes miteinander verglichen. So ist es erwünscht, dass zum Beispiel der Kotflügel eines Autos identische Oberflächeneigenschaften hat, wie eine identisch lackierte Stoßstange.

Es ist bekannt, bei der Farbabmusterung das Objekt in einem Licht zu betrachten, in welchem die maßgeblich vom Objekt reflektierte Lichtfarbe ausgeblendet ist. Das bedeutet, ein Objekt das beispielsweise grünes Licht absorbiert und deswegen vom Menschen als rot empfunden wird, in einem Licht ohne oder mit reduziertem Rotanteil zu betrachten. Bei dieser im farbigen Licht durchgeführten Kontrolle fallen geringfügige Farb- und Oberflächenstrukturabweichungen sehr stark hervor, die bei Beleuchtung des Objektes mit Weißlicht hinter der Dominanz der Lichtreflexion verschwinden würden. Durch die Verstärkung der ansonsten für das subjektive Farbempfinden des Menschen unterdrückten Effekte wird die Farbabmusterung deutlich vereinfacht.

Um die Qualitätskontrolle über einen längeren Zeitraum mit konstanter Qualität durchführen zu können, ist es wichtig, dass die Lichtquelle ein flächiges und in der Fläche besonders gleichmäßig intensives Licht erzeugt. Dabei soll die Farbgebung reproduzierbar sein und einzelne Farben sollen aus dem Spektrum ausgeblendet werden können. Schließlich ist es wichtig, auch Weißlicht bei verschiedener Farbtemperatur von ca. 2.700 K bis hin zu 10.000 K reproduzierbar zur Verfügung stellen zu können. Im Prinzip eignen sich für diese Aufgaben hintergrundbeleuchtete, matt gestaltete Scheiben, wie diese zum Beispiel in der Displaytechnik eingesetzt werden. Um Farben zu mischen, ist es auch bekannt, mehrfarbige LED für die Flächenbeleuchtung einzusetzen, in denen verschieden dotierte Halbleiter auf einem gemeinsamen Substrat individuell ansteuerbar sind, und diese gleichmäßig über die Fläche der Leuchte zu verteilen. Der Aufbau von Leuchten, die zur Beleuchtung in einer Station zur Farbabmusterung eingesetzt werden sollen, kann aufgrund der erforderlichen Größe der Farbabmusterungsleuchten in der Größenordnung von ca. 1 m$^2$ und auch mehr schnell sehr kostenintensiv werden.

In der japanischen Patentanmeldung JP 2010 218 991 A wird eine gattungsgemäße Hintergrundbeleuchtung für ein LCD-Display beschrieben. Darin ist vorgesehen, dass sich rekflektierende Punkte auf dem LCD-Hintergrund mit Abstand von dem Lichtquellenmodul vergrößern um das zur Mitte hin abnehmende Licht durch stärkere Reflektion zu verstärken. Es handelt sich bei der Flächenvergrößerung der rekflektierende Punkte um eine aus dem klassisches Halbton-Verfahren aus der Zeitungsdrucktechnik übernommene Technologie, um Helligkeiten über den Druckbereich zu variieren.

In der deutschen Offenlegungsschrift DE 192 40 201 A1 wird beschrieben, dass ein allgemeiner Leuchtkörper aus einer Vielzahl quer zu ihrer Achse lichtabstrahlender linearer Lichtleitelemente besteht.

In dem US-Patent US 8,592,748 B2 wird ein Verfahren offenbart, mit dem mit Hilfe der Tristimulus-Kurven nach dem CIE ein Weißton aus dem Licht von schmalbandigen LED erzeugt werden kann. Dieses Weißlicht soll für eine Farbabmusterung verwendet werden können.

In der internationalen Patentanmeldung WO 02/097324 A1 wird ebenso wie in japanischen Patentanmeldung JP 2010 218 991 A eine Rückseitenbeleuchtung für ein LCD-Display offenbart. Nach der offenbarten Lehre ist vorgesehen, zwei Platten parallel zu legen und diese über eine Umlenkung miteinander zu verbinden. Der Effekt ist eine Verlängerung des zu mischenden Lichtes.

Aufgabe der Erfindung ist es, eine Farbabmusterungsleuchte zur Verfügung zu stellen, die sehr günstig herzustellen ist. Dabei sollen keine Kompromisse in der Gleichmäßigkeit des Lichtes über die Fläche eingegangen werden.

Die der Erfindung zu Grunde liegende Aufgabe wird dadurch gelöst durch die Farbabmusterungsleuchte mit den Merkmalen nach Anspruch 1. Weitere vorteilhafte Ausgestaltungen sind in den Unteransprüchen zu Anspruch 1 angegeben.

Nach der Erfindung ist also vorgesehen, einfarbige LED als diskrete Bauelemente in Gruppen und nicht etwa mehrfarbige LED mit verschieden dotierten Halbleitern auf einem gemeinsamen Substrat als integrierte Schaltkreise (mehr als eine LED auf einem Substrat) einzusetzen. Dabei sollen die einzelnen LED als einzelne, individuelle Bauteile gemeinsam auf einer Platine oder auf einem elastischen oder rigiden Platinenstreifen angeordnet und verbaut sein.

Die farbigen LED, die in Gruppen eingesetzt werden und ihr Licht in eine seitliche Kante der Scheibe einstrahlen, haben durch den Aufbau als diskrete Bauelemente einen durch die Baugröße von diskreten Bauelementen natürlichen Abstand; bei LED in der Größenordnung von 0,5 mm als allerkleinsten Durchmesser bis hin zu LED mit einem Durchmesser von 5 mm als größten Durchmesser. Dadurch ergibt sich das Problem, dass die Auflösung des menschlichen Auges in Verbindung mit der typischen Einsatzsituation einer Farbabmusterungsleuchte, nämlich in einem Abstand von ca. 0,5 m bis ca. 5 m vom zu betrachtenden und zu prüfenden Objekt, ausreicht, die einzelnen Lichtkegel der individuellen LED voneinander zu unterscheiden. Hier kommt es also auf die tatsächlichen Größenverhältnisse des Leuchtenaufbaus an. Für eine hier vorgestellte Farbabmusterungsleuchte ist es vorgesehen, dass die Kantenlänge der transparenten Scheibe mindestens 40 cm beträgt und maximal 2,20 m beträgt. Diese Größenordnung führt zu Leuchten mit einer leuchtenden Fläche von mindestens ca. 0,10 m$^2$ (0,16 m$^2$, wenn die Leichte quadratisch ist) bis hin zu maximal ca. 5,00 m$^2$ (4,84 m$^2$, wenn die Leuchte quadratisch ist).

Überraschender Weise hat es sich herausgestellt, dass bei dem erfindungsgemäßen Aufbau der Farbabmusterungsleuchte das Licht innerhalb der Scheibe in einem so kurzen Abstand für das menschliche Auge nicht mehr auflösbar gemischt wird, dass eine Abdeckung der Scheibenkante der transparenten Scheibe durch eine maskierende, lichtundurchlässige Kantenblende, die zwischen 1 cm und 5 cm, maximal bis 8 cm in die Fläche der dem Betrachter zugewandten Seite hineinragt, ausreicht, um ein gleichmäßiges Licht zu erzeugen. Dieses Licht ist für die menschliche Empfindung frei von einem Farbsaum oder einem Rand, der aus vielen Farben besteht.

Der Abstand der einzelnen, individuellen LED als diskrete Bauelemente kann innerhalb der erfindungsgemäßen Farbabmusterungsleuchte einen Abstand von mindestens 1 mm bis maximal 10 mm zueinander aufweisen, wobei das Spektrum des Lichts je zweier benachbarter LED unterschiedlich ist. Auf diese Weise wird eine Farbkette von LED aufgebaut.

Zur Vergleichmäßigung der Lichtintensität über die gesamte, offen liegende, transparente Scheibe und auch um vom Menschen empfundene, störende Intensitätsmuster über die leuchtende Fläche zu vermeiden, ist in der Farbabmusterungsleuchte vorgesehen, dass zusammenhängende Flächen der Bereiche der vom Betrachter abgewandten und strukturierten Seite der Scheibe kleiner als 1 mm$^2$, bevorzugt kleiner als 0,25 mm$^2$ sind. Unterhalb dieser Größenordnung ist das menschliche Auge auch bei überdurchschnittlichem Visus (Winkelauflösung) nicht mehr in der Lage, die einzelnen Bereiche aufzulösen und daher ein störendes Muster zu sehen.

Zur Erzeugung von verschieden farbigem Licht, zum Beispiel durch gezieltes Austasten von bestimmten Farbanteilen, kann vorgesehen sein, dass das Licht einer ersten Gruppe von LED ein Wellenlängenmaximum im vom Menschen als blau empfundenen Bereich (B) zwischen 460 nm und 490 nm mit einer Halbwertsbreite zwischen 5 nm und 50 nm aufweist, das Licht einer zweiten Gruppe von LED ein Wellenlängenmaximum im vom Menschen als rot empfundenen Bereich (R) zwischen 570 nm und 620 nm mit einer Halbwertsbreite zwischen 5 nm und 50 nm aufweist, und das Licht einer dritten Gruppe von LED ein Wellenlängenmaximum im vom Menschen als grünlich (engl. *"lime"*) empfundenen Bereich (L) bei etwa 550 nm $^+/_-$ 30 nm aufweist, wobei das Spektrum der LED dieser Gruppe durch einen Leuchtstoff, wie ein Seltenerdphosphat, verbreitert ist.

Eine so aufgebaute Leuchte weist rote, blaue und grünlich scheinende LED als einzelne, farbige Lichtquellen auf, wobei jeweils eine der Gruppen zum Ausblenden von Licht einer Farbe gezielt ausgeschaltet werden kann oder zumindest deren Intensität verringert werden kann. Das grünliche (eng. "lime") Licht stellt neben dem Grünanteil zusätzliche Spektralanteile zwischen den einzelnen, eher schmalbandigen LED-Farben zur Verfügung, so dass angeleuchtete Farben eines Objektes, deren Absorptionsmaximum gegebenenfalls zwischen den Wellenlängen der Farben der drei farbigen LED liegt, farbgetreuer im Licht der Farbabmusterungsleuchte erscheint.

Zur Erhöhung eines besseren Farbwiedergabeindex kann des Weiteren vorgesehen sein, dass das Licht einer vierten Gruppe von LED ein Spektrum aufweist, welches vom Menschen als weiß im Sinne der Planck'schen Kurve im CIE-Stimulusdiagramm in der CIE-Normfarbtafel (FT) empfunden wird.

Diese durch seine weiße Farbe breitbandige Licht stellt dem Mischlicht aus rot, blau und grünlich (eng. "lime") abermals zusätzliche Spektralanteile zwischen den einzelnen, eher schmalbandigen LED-Farben zur Verfügung so dass angeleuchtete Farben eines Objektes, dessen Absorptionsmaximum gegebenenfalls zwischen den Wellenlängen der Farben der drei farbigen LED liegt, farbgetreuer im Licht der Farbabmusterungsleuchte erscheint.

Da das durch einzelne LED synthetisierte Licht kein kontinuierliches Spektrum mit im Wesentlichen geradem Kurvenverlauf der Intensitätsverteilung aufweist, sondern durch die Intensitätsmaxima der verwendeten LED charakterisiert ist, ist die Einhaltung eines Farbwiedergabeindex notwendig, damit die Farben der zu prüfenden Objekte naturgetreu (wie unter Himmelslicht) unter Kunstlicht der erfindungsgemäßen Farbabmusterungsleuchte erscheinen. Der Farbwiedergabeindex ist eine photometrische Größe, mit der sich die Qualität der Farbwiedergabe von Lichtquellen gleicher korrelierter Farbtemperatur beschreiben lässt. Die korrelierte Farbtemperatur beschreibt einen Farbort in der üblichen relativen Auftragung der sogenannten Stimuluskurven im CIE-Normvalenzsystem, benannt nach der internationalen Kommission (CIE - Commission internationale de l'éclairage). Diese Auftragung ist auch als CIE-Normfarbtafel bekannt. Der Farbort der korrelierten Farbtemperatur liegt auf einer Kurve in der CIE-Normfarbtafel, welcher der Farbempfindung eines schwarzen Strahlers nach Planck entspricht, wobei jede Temperatur eines schwarzen Strahlers im Bereich von ca. 1.000 K bis ca. 10.000 K einer etwas anders durch den Menschen empfundene Farbe entspricht. Die Auftragung der Farbempfindung eines schwarzen Strahlers bei unterschiedlicher Temperatur in einer CIE-Normfarbtafel entspricht der Planck'schen Schwarzstrahlerkurve oder kurz: Planck-Kurve.

Bei der Bestimmung des Farbwiedergabeindex werden Referenzfarben dem zu bemessenden Licht ausgesetzt und die Remission der Referenzfarben wird bestimmt. Aus den Remissonswerten kann der Farbwiedergabeindex nach bekannter Weise berechnet werden. Ein Wert des Farbwiedergabeindex nahe 100 zeigt eine hohe Qualität der Farbwiedergabe an.

Da eine beliebige Lichtfarbe in der CIE-Normfarbtafel durch eine Vielzahl unterschiedlicher Kombinationen von Lichtquellen mit anderer Lichtfarbe konstruiert werden kann, nämlich durch konstruierte Wahl der Intensität der verschiedenen Lichtfarben, ist es möglich, mit einer geringen Anzahl von schmalbandigen Lichtquellen eine beliebige Lichtfarbe zu erzeugen. Die exakte Vorgehensweise zur Konstruktion einer Lichtfarbe aus anderen Farben mit Hilfe der CIE-Normfarbtafel ist den Veröffentlichungen der CIE entnehmbar und Gegenstand der modernen Farblehre. Dieselbe Lichtfarbe ist aber, ohne dass ein Mensch dies unterscheiden könnte, auch mit einer größeren Anzahl unterschiedlicher Farbbeimischungen konstruierbar. Als grobe Regel gilt dabei, dass mit steigender Anzahl von Lichtfarben, aus denen eine Lichtfarbe erzeugt wird, auch der Farbwiedergabeindex steigt.

Für eine einfache Bedienung ist in vorteilhafter Ausgestaltung der Erfindung vorgesehen, dass eine Steuerungsvorrichtung die in verschiedene Gruppen aufgeteilten LED mit elektrischem Strom versorgt, wobei der Versorgungsstrom jeder Gruppe variierbar ist, und wobei mit einem Stellknopf die Lichtfarbe auf der Planck'schen Kurve im CIE-Stimulusdiagramm einstellbar ist.

Um einzelne Farben für die Farbabmusterung aus der Farbabmusterungsleuchte einfach ausblenden zu können, kann vorgesehen sein, dass eine Steuerungsvorrichtung die in verschiedene Gruppen aufgeteilten LED mit elektrischem Strom versorgt, wobei der Versorgungsstrom jeder Gruppe variierbar ist, wobei mit einem Stellknopf vorgewählte Lichtfarben einstellbar sind, die entweder durch Austasten einer gesamten LED-Gruppe oder durch Schwerpunktsverlagerung der gemeinsamen Lichtfarbe im CIE-Stimulusdiagramm erzeugt werden. Ein Stellknopf im Rahmen der hier beschriebenen Erfindung umfasst sämtliche Bedienungsmittel für eine Steuerungsvorrichtung, wie Knöpfe, Potentiometer, Tasten, berührungsempfindliche Anzeigen (engl. "Touch-Screen"), Näherungsschalter, Detektoren für eine Gestensteuerung.

Die Erfindung wird anhand der folgenden Figuren näher erläutert. Es zeigt:

Fig. 1 die äußere Erscheinung einer erfindungsgemäßen Farbabmusterungsleuchte,

Fig. 2 die Farbabmusterungsleuchte aus Fig. 1 mit abgenommener Kantenblende und skizzierter Steuerungsvorrichtung mit Fernbedienung,

Fig. 3.1 Skizzierung der Wirkung der Strukturierung der vom Betrachter abgewandten Seite der Scheibe mit Darstellung von Intensitätsverläufen auf der dem Betrachter zugewandten Seite der Scheibe,

Fig. 3.2 die Strukturierung aus Fig. 3.1 in einer vergrößerten Ansicht,

Fig. 4 CIE-Stimulusdiagramm mit eingezeichneten Farbempfindungen und Verlauf der Plank-Kurve,

Fig. 5 beispielhafte Farbspektren von vier LED-Gruppen,

Fig. 6 eine Prinzipskizze der Scheibe in einer seitlichen Ansicht.

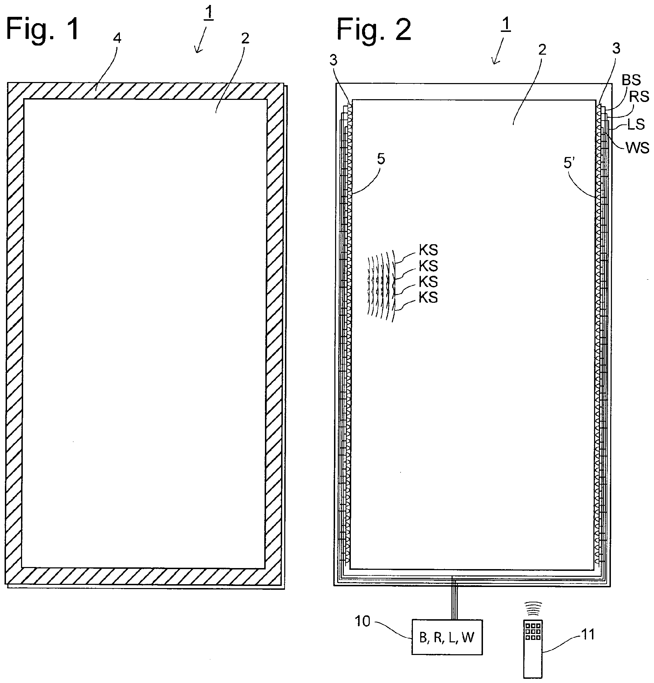

In **Figur 1** ist die äußere Erscheinung einer erfindungsgemäßen Farbabmusterungsleuchte 1 in einer Ansicht von vorn dargestellt, welche im eingeschalteten Zustand eine über die Fläche gleichmäßig intensiv leuchtende Scheibe 2 aufweist. Zur Abdeckung von LED 3, die ihr Licht seitlich in die Scheibe 2 einkoppeln und auch, um einen geringfügigen Farbsaum abzudecken, ist eine die Scheibe 2 einfassende Kantenblende 4 vorgesehen. Wichtig an der hier vorgestellten Erfindung sind die tatsächlichen Dimensionen der Farbabmusterungsleuchte 1 in Verbindung mit deren innerem Aufbau. Da vorgesehen ist, dass die in verschiedene Gruppen aufgeteilten LED 3 seitlich an der transparenten Scheibe 2 regelmäßig abwechselnd angeordnet sind und ihr Licht in eine seitliche Kantenfläche 5, 5' der transparenten Scheibe 2 einstrahlen, ist der Abstand individueller LED durch die Größe der als diskrete Bauelemente eingesetzten LED 3 vorgegeben. Bei einem Abstand von 0,5 mm bis maximal 5 mm in Verbindung mit einer Kantenlänge der Scheibe 2 von 40 cm bis ca. 2,20 m und einem Abstand des Nutzers von der Farbabmusterungsleuchte vom Prüfobjekt zwischen 0,5 m und 5 m wird eine Größenordnung des Abstands zwischen den LED 3 für den Menschen räumlich auflösbar. Das überraschende Moment ist, dass eine transparente Scheibe 2 das Licht der seitlich eingekoppelten LED 3 bei deren Abstand zwischen 0,5 mm und 10 mm zueinander bereits nach wenigen cm, etwa schon nach 1 cm bis ca. 5 cm so gut durchmischt, dass das aus der Scheibe 2 auf der dem Betrachter zugewandten Seite (Vorderseite) austretende Licht gleichmäßig gefärbt erscheint und eine über eine beliebige Fläche eintretende Farbvariation vom menschlichen Auge nicht mehr wahrgenommen werden kann.

In **Figur 2** ist die Farbabmusterungsleuchte 1 aus Figur 1 mit abgenommener Kantenblende 4 dargestellt, wobei zusätzlich noch eine Steuerungsvorrichtung 10 und eine zur Steuerungsvorrichtung 10 korrespondierende Fernbedienung 11 eingezeichnet ist. Unterhalb der hier nicht mehr vorliegenden Kantenblende 4 sind einzelne, in Gruppen aufgeteilte LED 3 seitlich vorhanden, welche ihr Licht in eine seitliche Kantenfläche 5, 5' der transparenten Scheibe 2 einkoppeln. Bei drei Gruppen (R, B, L) verschiedener LED 3 mit rotem, blauem und grünlichem "(eng. *"lime")* Licht, sind einzelne LED 3 wiederholend und regelmäßig angeordnet, wobei zwei unmittelbar benachbarte LED 3 voneinander verschiedene Farben oder Lichtspektren aufweisen. Die drei Gruppen verschiedener LED 3, nämlich eine erste LED-Gruppe (B) mit blau erscheinendem Licht, eine zweite Gruppe (R) mit rot erscheinendem Licht und eine dritte Gruppe mit grünlich (eng. *"lime")* erscheinendem Licht werden je über eine gemeinsame Steuer- und Stromversorgungsleitung (BS, RS, LS) von der Steuerungsvorrichtung 10 angesteuert. Dabei ist es möglich, die Steuerungseinrichtung 10 mittels der Fernbedienung 11 drahtlos zu bedienen und voreingestellte Farben auszutasten oder Farben nach einer bestimmten Farbzusammenstellung einzustellen. In der Fläche der Scheibe 2 sind vier Kreissegmentgruppen KS für die LED der ersten, zweiten, dritten und gegebenenfalls vierten Gruppe der LED 3 eingezeichnet. Diese Kreissegmentgruppen KS stellen die Linien gleicher Lichtintensität je einer LED 3 dar. Die starke Überlappung und auch die vielfache Reflexion an den Innenseiten der Scheibe 2 führen zu einer sehr raschen Mischung innerhalb der Hauptfortpflanzungsrichtung des seitlich eingestrahlten Lichts, so dass schon innerhalb weniger cm eine vollkommen homogen und gleichmäßige Lichtfarbe herrscht.

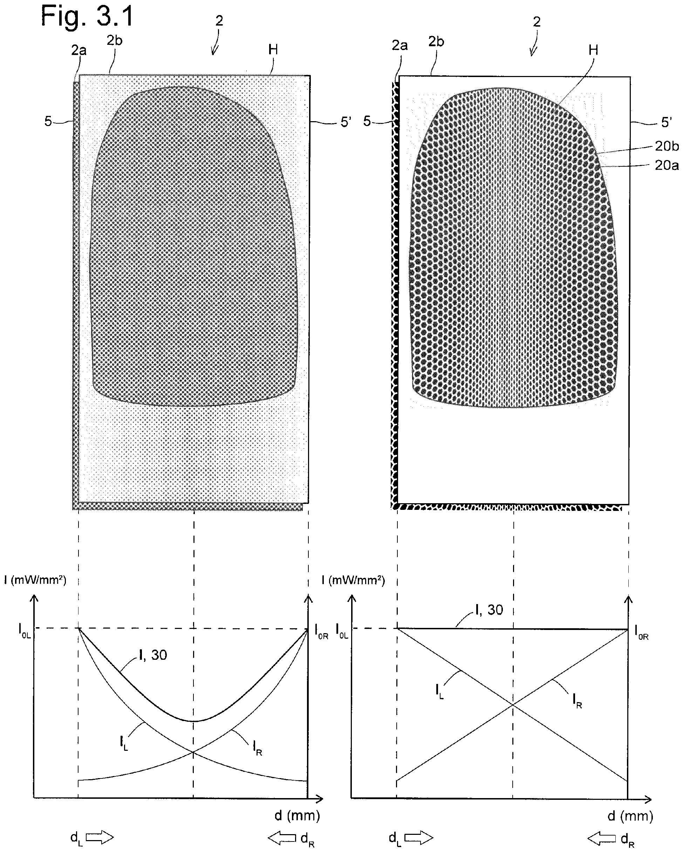

In **Figur 3.1** ist die Wirkung des zur Mitte der Leuchte hin zunehmenden Flächenverhältnisses zweier Bereiche dargestellt, in welchem ein erster Bereich ebene und zur dem Betrachter zugewandten Seite 2b planparallele Bereiche 20a aufweist und ein zweiter Bereich so aufgebaut ist, dass dessen Ebene nicht planparallel zu der dem Betrachter zugewandten Seite 2b ist oder nur aufgeraut ist. Von einer seitlichen Kantenfläche 5, 5' nimmt der Anteil der Bereiche zu, deren Ebene nicht planparallel zu der dem Betrachter zugewandten Seite 2b ist oder nur aufgeraut ist.

Für den Vergleich ist in der linken Hälfte der Figur 3.1 eine Scheibe 2 dargestellt, welche auf der vom Betrachter abgewandte Seite 2a gleichmäßig strukturiert und darüber hinaus im Wesentlichen (bis auf die Strukturierung selbst) planparallel zu der zum Betrachter zugewandten Seite 2b ist. In der rechten Hälfte der Figur 3.1 ist hingegen eine Scheibe 2 dargestellt, welche auf der vom Betrachter abgewandten Seite 2a strukturiert ist und Flächenbereiche aufweist, deren Ebene nicht planparallel zu der dem Betrachter zugewandten Seite 2b ist oder nur aufgeraut ist.

In der linken Hälfte der Figur 3.1 ist dargestellt, wie sich die Lichtintensität $I_{0L}$ und $I_{0R}$ auf dem Weg zur Mitte der Leuchte entlang der Wege $d_L$ und $d_R$ allmählich verringert, dargestellt durch die Graphen $I_L$ und $I_R$. Die Summe der Intensitäten $I_L$ und $I_R$ ergibt den in der linken, unteren Hälfte von Figur 3.1 dargestellten Intensitätsverlauf I, Summenprofil 30 mit einem deutlichen Minimum in der Mitte, das zu vermeiden ist.

Hier ist vorgesehen, dass bei dem Muster H in der rechten Hälfte der Figur 3.1 Sechsecke (Hexagons) zur Mitte der Farbabmusterungsleuchte stets kleiner werden, wobei die umrandenden Linien des Sechseckmusters stets eine gleiche Breite aufweisen. Die Linien des Sechseckmusters sind Aufrauungen, die beispielsweise durch Laserablation in die vom Betrachter abgewandte Seite (Rückseite) der Scheibe 2 eingebracht worden sind. An diesen aufgerauten Stellen wird das Licht innerhalb der Scheibe 2 anders reflektiert als es bei einer Totalreflexion der Fall sein würde. Das einmal die aufgerauten Stellen getroffene Licht wird sodann aus der dem Betrachter zugewandten Seite (Vorderseite) ausgekoppelt.

Werden die Sechsecke (Hexagons) von der seitlichen Kantenfläche 5, 5' zur Mitte hin stets kleiner, so verringert sich das lokale Verhältnis der totalreflektierenden Flächenbereiche zu den Bereichen, die aufgeraut sind. Über die Fläche des hexagonalen Musters wechseln sich ebene und zur dem Betrachter zugewandten Seite 2b (Vorderseite) der Scheibe 2 planparallele Bereiche 20a, die dunkel erscheinen, mit solchen Bereichen 20b ab, deren Ebene nicht planparallel zu der dem Betrachter zugewandten Seite 2b (Rückseite) ist oder nur aufgeraut ist und daher hell erscheinen. Diese, in der rechten Hälfte dargestellte Leuchte weist ein vergleichmäßigtes Profil der Lichtauskopplung auf und zeigt deswegen ein lineares Abfallen der Intensitäten $I_L$ und $I_R$, die in Summe das auf der rechten, unteren Seite dargestellte Intensitätsverlauf I, Summenprofil 30.

Eine gleichmäßig auf einer Seite aufgeraute, und auf der anderen Seite polierte Scheibe 2 mit planparallelen Oberflächen würde an jeder Stelle einen konstanten Anteil des an der Stelle herrschenden Lichtstroms verlieren. Dies führt zu einer Lichtabnahme nach folgender Intensitätsabnahme mit fortschreitendem Weg d:

$$I = I_0 * e^{-(k*d)} \tag{I}$$

mit:

I      Intensität in mW/mm$^2$
$I_0$     Anfangsintensität
e      natürliche Zahl e, Basis des natürlichen Logarithmus
k      Konstante
d      Wegstrecke

Daraus folgt, dass bei beidseitiger Einstrahlung von Licht, die nach Wegstrecke d austretende Lichtintensität bestimmt wird durch das Licht der linken Seite nach

$$I_L = I_{0L} * e^{-(k*dL)}$$

mit:

dL     Wegstrecke von der linken Seite
$I_L$     Intensität des Lichts der linken Seite
$I_{0L}$    Anfangsintensität des Lichts der linken Seite

und durch das Licht der rechten Seite nach

$$I_R = I_{0R} * e^{-(k*dR)} \tag{II}$$

mit

dR     Wegstrecke von der rechten Seite
$I_R$     Intensität des Lichts der linken Seite
$I_{0R}$    Anfangsintensität des Lichts der rechten Seite

Die gesamte Intensität ist also die Summe beider, nämlich:

$$I = I_L + I_R = I_0 * e^{-(k*dL)} + I_0 * e^{-(k*dR)} \tag{III}$$

Sofern die Anfangsintensitäten auf beiden Seiten identisch sind (symmetrische Ausleuchtung), so gilt

$$I = I_L + I_R = I_0 * [\, e^{-(k*dL)} + e^{-(k*dR)} \,] \tag{IV}$$

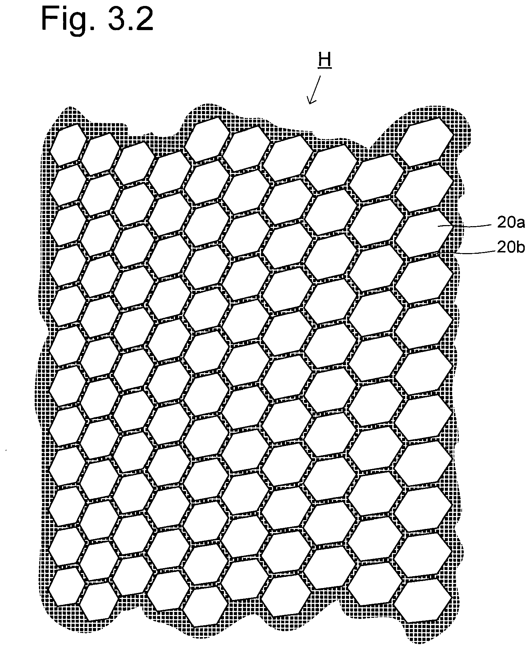

Die Lichtintensität auf der vorderen, dem Betrachter zugewandten Scheibenoberfläche 2b (Vorderseite) einer auf der dem Betrachter abgewandten Seite 2a (Rückseite) gleichmäßig und homogen aufgerauten Seite würde also eine Lichtverteilung nach Gleichung (IV) zeigen und somit in der Mitte der Scheibe einen dunkleren Streifen zeigen. Der Verlauf der Lichtintensität I ist im unteren Teil von Figur 3 als Summenprofil 30 eingezeichnet. Geschieht also die Lichteinkopplung auf einer Seite, beispielsweise der linken Seite, mit so hoher Intensität, dass auch nach Passage der Scheibenmitte auf der rechten Scheibenseite noch Licht austritt, so ergibt sich das in Figur 3 dargestellte Summenprofil 30. Damit das Licht über die Fläche der Scheibe 2 gleichmäßig und homogen aus der Scheibe 2 austritt, ist vorgesehen, dass das lokale Flächenverhältnis der auf der Rückseite zur Vorderseite planparallelen Bereiche 20a zu den auf der Rückseite nicht zur Vorderseite planparallelen oder aufgerauten Bereichen 20b so gewählt ist, dass unter Berücksichtigung des lokalen Lichtstromes über die Fläche der Scheibe 2 eine homogene und gleichmäßige Lichtauskopplung geschieht. Da schon bei der Überlagerung von zwei Lichtströmen $I_L$ und $I_R$ von der linken und von der rechten Seite die notwendige Funktion der lokalen Flächenverhältnisse (planparallel zu nicht planparallel / aufgeraut) nicht mehr analytisch und geschlossen darstellbar ist, muss hier die numerisch zu ermittelnde Funktion über das (eindeutige) Ergebnis definiert werden. Das Flächenverhältnis soll sich so ändern, dass die Lichtintensität des ausgekoppelten Lichts in Abhängigkeit vom lokal verfügbaren Lichtstrom über die Fläche konstant ist.

In **Figur 3.2** ist Muster H auf der vom Betrachter abgewandten Seite (Rückseite) vergrößert dargestellt. Die sechseckigen Bereiche 20a, die planparallel zur dem Betrachter zugewandten Seite (Vorderseite) sind, werden von rechts nach links langsam kleiner. Dabei sind die begrenzenden Streifen als Bereiche 20b, die aufgeraut sind oder nicht planparallel zur dem Betrachter zugewandten Seite (Vorderseite) stets gleich breit. Dadurch vergrößert sich das lokale Flächenverhältnis zwischen diesen Bereichen 20a und 20b, so dass zur Mitte hin die Streifen einen größeren Flächenanteil aufweisen. In der hier gewählten Darstellung würden die sechseckigen Bereiche 20a, die planparallel zur dem Betrachter zugewandten Seite (Vorderseite) sind, dunkel erscheinen. Demgegenüber würden die begrenzenden Streifen als Bereiche 20b, die aufgeraut sind oder nicht planparallel zur dem Betrachter zugewandten Seite (Vorderseite) sind, hell erscheinen.

Neben dem hier dargestellten Muster H aus Sechsecken sind auch solche Muster auf der vom Betrachter abgewandten Seite 2a der Scheibe 2 möglich, die an ein Halbton-Muster des Zeitungsdrucks erinnern. Auch damit ließen sich die Intensitätsverläufe vergleichmäßigen. Die besten Ergebnisse haben jedoch die Sechseckmuster erzielt.

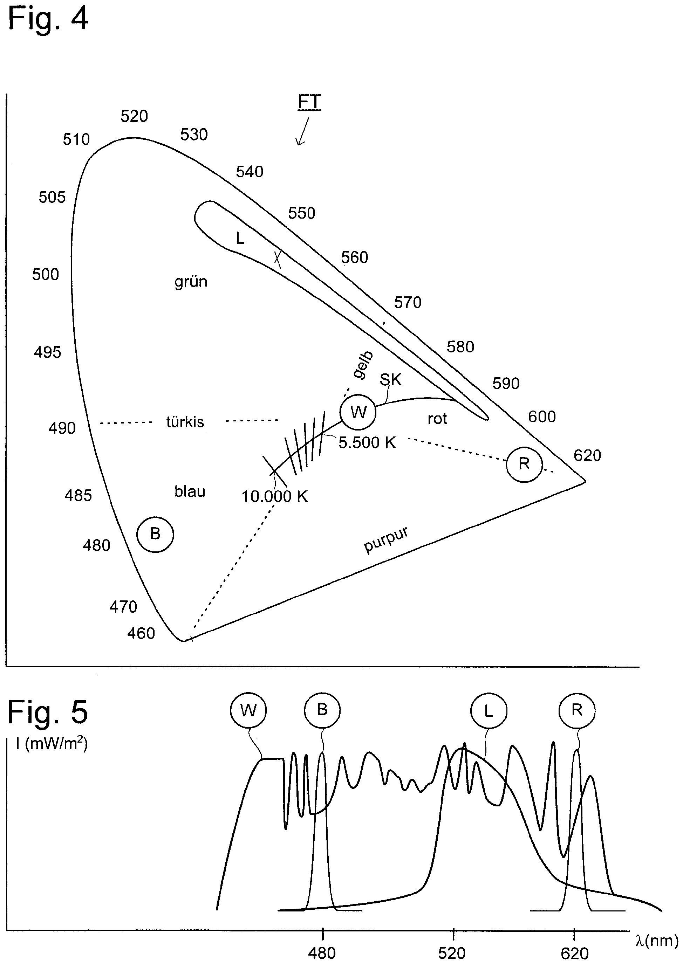

In **Figur 4** ist eine CIE-Normfarbtafel FT abgebildet, wobei aufgrund der schwarzweiß-Darstellung die unterschiedlichen Farben in der CIE-Normfarbtafel FT in den Bereichen blau, grün, rot und purpur und den Grenzfarbbereichen gelb und türkis die Farbe nur eingeschrieben sind. Die CIE-Normfarbtafel FT zeigt eine parametrische Auftragung von zwei von drei normierten sogenannten Stimuluskurven des menschlichen Sehvermögens. Ein Stimulus ist dabei einer der Grundfarben Rot, Grün und Blau zuordenbar. Da die Stimuluskurven normiert sind, genügt eine zweidimensionale Auftragung, da der Wert des dritten Stimulus durch zwei frei wählbare Stimuluswerte festgelegt ist. Begrenzt ist die CIE-Normfarbtafel durch eine Grenzkurve GK, welche die menschliche Farbempfindung von monochromatischem Licht von 380 nm bis 830 nm darstellt, und einen kurvenförmigen Verlauf aufweist. Dabei liegen die kurzwelligen Kurvenabschnitte der Grenzkurve GK von 450 nm bis 380 nm im links-unteren Bereich und im langwelligen Bereich von 620 nm bis 830 nm im rechten Bereich der Grenzkurve GK sehr nahe beieinander. Der untere gerade Abschnitt vom kurzwelligen Bereich zum langwelligen Bereich der Grenzkurve GK ist die sogenannte Purpurlinie und hat keine reale Bedeutung. Die Purpurlinie ist zu Konstruktionszwecken von Mischfarben in der CIE-Normfarbtafel FT notwendig. Innerhalb der CIE-Normfarbtafel FT befindet sich die Planck'sche Schwarzstrahlerkurve SK, welche die Lichtfarben eines schwarzen Strahlers mit unterschiedlicher Temperatur nach Planck miteinander verbindet. Diese Farben werden als Warmweiß (geringe Farbtemperaturen) bis Kaltweiß (hohe Farbtemperaturen) bezeichnet. Im rechten Teil der Kurve befinden sich die geringen Temperaturen im Bereich 1.000 K und im linken Bereich befinden sich die hohen Temperaturen bis ca. 25.000 K. Ein schwarzer Strahler mit einer Temperatur von 1.000 K strahlt demnach rotes Licht aus, ein schwarzer Strahler mit einer Temperatur von 10.000 K strahlt demnach blaues Licht aus. Die Planck'sche Schwarzstrahlerkurve SK wird von Linien gleicher korrelierter Farbtemperatur geschnitten. Von diesen ist beispielhaft eine Linie mit gleicher korrelierter Farbtemperatur von 5.500 K hervorgehoben und auch eine Linie mit gleicher korrelierter Farbtemperatur von 10.000 K. Da die Planck'sche Schwarzstrahlerkurve SK für sehr hohe Farbtemperaturen in einer Singularität am linken Ende der die Planck'sche Schwarzstrahlerkurve SK endet, umfasst der Farbbereich um das gestrichelte Oval den Bereich der Farbtemperatur von 5.500 K bis unendlich. Die Linien gleicher korrelierter Farbtemperatur spannen den Bereich auf, innerhalb dessen die für den Mensch subjektiv gesehene Farbe frei variierbar ist.

Um eine beliebige Farbe aus verschiedenen LED mit unterschiedlichem Farbspektrum zu berechnen, ist es notwendig, den Schwerpunkt der verschiedenen Farbspektren aus den Farborten der verschiedenen Einzelfarblampen (verschiedene LED) und der Wichtung der Lichtintensitäten der Einzelfarblampen (verschiedene LED) in der CIE-Normfarbtafel FT zu berechnen. Um eine Farbe einzustellen, kann es genügen, eine Schwerpunktverlagerung durchzuführen, indem die Intensitäten verschiedener LED variiert werden. Beispielsweise kann der Farbort der Gruppe B der blauen LED beim Punkt B und der Farbort der Gruppe R der roten LED beim Punkt R in der CIE-Normfarbtafel FT liegen. Hierzu kommt die Verteilung des grünlich (engl. "*lime*") erscheinenden Lichts. Aus der graphischen Schwerpunktsbildung unter Wichtung der Lichtintensitäten berechnet sich aus den drei Farborten die gemeinsame Farbe.

Um den Farbwiedergabeindex zu erhöhen, ist in Ausgestaltung der Erfindung eine weitere LED-Gruppe (W) vorgesehen, welches vom Menschen als weiß im Sinne der Planck'schen Kurve im CIE-Stimulusdiagramm in der CIE-Normfarbtafel (FT) empfunden wird. Dieses Licht kann seinerseits aus dem Licht verschiedener, schmalbandiger LED erzeugt sein, oder aber durch ein Leuchtstoff, wie ein Seltenerdphosphat oder eine Mischung verschiedener Leuchtstoffe, verbreitert sein.

In **Figur 5** sind beispielhafte Spektren von vier LED-Gruppen dargestellt. Eine erste Gruppe (B) von LED zeigt eine Lichtemissionsbande bei einer Wellenlänge von $\lambda$ = 480 nm und erscheint einem menschlichen Betrachter als tiefblau. Eine zweite Gruppe (R) von LED zeigt eine Lichtemissionsbande bei einer Wellenlänge von $\lambda$ = 620 nm und erscheint einem menschlichen Betrachter als rot. Eine dritte Gruppe (L) von LED zeigt einen grünlichen Farbton (eng. "*lime*") und dessen Spektrum ist durch ein Leuchtphosphor verbreitert ist. Im Prinzip reicht es, aus diesen drei Grundfarben, Licht beliebiger Farbe zusammenzustellen. Um jedoch den Farbwiedergabeindex zu erhöhen, ist es in vorteilhafter Ausgestaltung der Erfindung vorgesehen, auch eine vierte Gruppe (W) von LED vorgesehen, im Wesentlichen einer weißen Farbe auf der Planck-Kurve entspricht. Dabei ist das Spektrum dieses Lichts durch eine Mischung von Leuchtstoffen eher komplex. Das sehr breite und komplexe Spektrum, das eine Farbe auf der Planck-Kurve hat, hilft, durch die Vielzahl der zur Verfügung gestellten Wellenlängenbereiche, den Farbwiedergabeindex zu erhöhen. Die hier eingezeichneten Farbspektren entsprechen den Farborten in Figur 4.

Um die Farbe der Farbabmusterungsleuchte zu variieren, kann es möglich sein, eine LED-Gruppe auszutasten oder eine Schwerpunktverlagerung des gemeinsamen Farbortes in der CIE-Normfarbtafel FT durch Änderung der Leuchtintensität der einzelnen LED-Gruppen vorzunehmen.

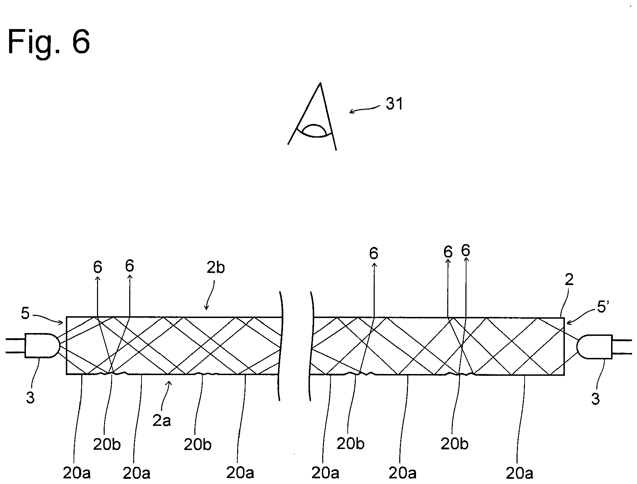

Zur Verdeutlichung, welche Seiten der Scheibe 2 strukturiert sind, ist in **Figur 6** eine Prinzipskizze der Scheibe 2 in einer seitlichen Ansicht dargestellt. Leuchtdioden 3 koppeln Lichtstrahlen 6 in die Kantenflächen 5 und 5' der Scheibe 2 ein. Der Betrachter ist durch ein stilisiertes Auge 31 dargestellt, der auf die dem Betrachter zugewandte Seite 2b (Vorderseite) schaut. Diese, dem Betrachter zugewandte Seite 2b (Vorderseite) ist planparallel und glatt. Die dem Betrachter abgewandte Seite 2a (Rückseite) ist hingegen mit zur Seite 2b (Vorderseite) planparallelen Bereichen 20a ausgestattet als auch mit strukturierten, also nicht zur dem Betrachter zugewandten Seite 2b (Vorderseite) planparallelen Bereichen 20b, ausgestattet. In diesen strukturierten, nicht zur dem Betrachter zugewandten Seite 2b (Vorderseite) planparallelen Bereichen wird eine auf die Reflexion an dieser Stelle folgende Reflexion auf der dem Betrachter zugewandten Seite 2a unterbunden, weil der Glanzwinkel unterschritten wird. In Folge davon tritt das Licht auf der dem Betrachter zugewandten Seite 2b aus. Durch das lokale Flächenverhältnis der Flächenbereich zwischen den Bereichen 20a und 20b auf der dem Betrachter abgewandten Seite 2a (Rückseite) wird bestimmt, wie hoch die lokale Intensität des austretenden Lichts auf der dem Betrachter zugewandten Seite 2b (Vorderseite) ist.

*BEZUGSZEICHENLISTE*

| | | | | |
|---|---|---|---|---|
| 1 | Farbabmusterungsleuchte | | 30 | Summenprofil |
| 2 | Scheibe | | | |
| 2a | vom Betrachter abgewandte Seite (Rückseite) | | 31 H | Auge (Benutzer) Muster |
| 2b | dem Betrachter zugewandte Seite (Vorderseite) | | B | blaue LED-Gruppe |
| | | | R | rote LED-Gruppe |
| 3 | LED | | L | grünliche (engl. "*lime*") LED-Gruppe |
| 4 | Kantenblende | | | |
| 5 | Kantenfläche | | W | weiße LED-Gruppe |
| 5' | Kantenfläche | | KS | Kreissegmentgruppe |
| 6 | Lichtstrahl | | | |
| | | | FT | CIE-Normfarbtafel |
| | | | GK | Grenzkurve |
| 10 | Steuerungsvorrichtung | | SK | Planck'sche Schwarzstrahlerkurve |
| 11 | Fernbedienung | | | |
| 20a | planparallele Bereiche | | | |
| 20b | nicht planparallele Bereiche | | | |

**Patentansprüche**

1.   Farbabmusterungsleuchte (1), aufweisend

- in drei, vier oder mehr verschiedene Gruppen aufgeteilte LED (3) mit unterschiedlichen Wellenlängenbereichen (B, R, L, W) des ausgestrahlten Lichts, und
- mindestens eine Farbmischeinrichtung zur homogenen Vermischung des Lichts der in verschiedene Gruppen aufgeteilten LED, wobei mindestens eine Farbmischeinrichtung eine transparente Scheibe (2) ist, die auf der vom Betrachter abgewandten Seite (2a) mit einer Strukturierung versehen ist, in der sich ebene und zur dem Betrachter zugewandten Seite (2b) planparallele Bereiche (20a) mit solchen Bereichen (20b) abwechseln, deren Ebene nicht planparallel zu der dem Betrachter zugewandten Seite (2b) ist oder nur aufgeraut ist, **dadurch gekennzeichnet, dass**
- die in verschiedene Gruppen (B, R, L, W) aufgeteilten LED (3) seitlich an der transparenten Scheibe (2) regelmäßig abwechselnd angeordnet sind und ihr Licht in eine seitliche Kantenfläche (5) der transparenten Scheibe (2) und in eine dieser Kantenfläche (5) gegenüberliegende seitliche Kantenfläche (5') der transparenten Scheibe (2) einstrahlen,
- das lokale Flächenverhältnis der zur dem Betrachter zugewandten Seite (2b) nicht planparallelen oder nur aufgerauten Bereiche (20b) zu den zur dem Betrachter zugewandten Seite (2b) planparallelen Bereichen (20a) zur Mitte zwischen den beiden gegenüberliegenden seitlichen Kantenflächen (5, 5'), an denen Licht eingestrahlt wird, hin zunimmt wobei

die Bereiche als Sechseckmuster ausgeführt sind, wobei umrandete hexagonalen Bereiche (20a) planparallel zur dem Betrachter zugewandten Seite (2b) sind und zur Mitte zwischen den beiden gegenüberliegenden seitlichen Kantenflächen (5, 5'), an denen Licht eingestrahlt wird, hin stets kleiner werden, und wobei

die umrandenden Linien (20b) des hexagonalen Musters aufgeraut oder nicht planparallel zur dem Betrachter zugewandten Seite (2b) sind sowie stets eine gleiche Breite aufweisen, und zusammenhängende Flächen der Bereiche der vom Betrachter abgewandten und strukturierten Seite der Scheiber kleiner als 1 mm$^2$, bevorzugt kleiner als 0,25 mm$^2$ sind.

2.  Farbabmusterungsleuchte nach Anspruch 1,
    **dadurch gekennzeichnet, dass**
    individuelle LED (3) einen Abstand vom mindestens 1 mm bis maximal 10 mm zueinander aufweisen, wobei das Spektrum des Lichts je zweier benachbarter LED (3) unterschiedlich ist.

3.  Farbabmusterungsleuchte nach einem der Ansprüche 1 bis 2,
    **dadurch gekennzeichnet, dass**
    die Kantenlänge der transparenten Scheibe (2) mindestens 40 cm beträgt.

4.  Farbabmusterungsleuchte nach einem der Ansprüche 1 bis 3,
    **dadurch gekennzeichnet, dass**
    die Kanten (5, 5') der transparenten Scheibe (2) durch eine maskierende, lichtundurchlässige Kantenblende (4) abgedeckt sind, die zwischen 1 cm und 5 cm, maximal bis 8 cm in die Fläche der dem Betrachter zugewandten Seite (2b) hineinragt.

5.  Farbabmusterungsleuchte nach einem der Ansprüche 1 bis 4,
    **dadurch gekennzeichnet, dass**

    - das Licht einer ersten Gruppe von LED ein Wellenlängenmaximum im vom Menschen als blau empfundenen Bereich (B) zwischen 460 nm und 490 nm mit einer Halbwertsbreite zwischen 5 nm und 50 nm aufweist,
    - das Licht einer zweiten Gruppe von LED ein Wellenlängenmaximum im vom Menschen als rot empfundenen Bereich (R) zwischen 570 nm und 620 nm mit einer Halbwertsbreite zwischen 5 nm und 50 nm aufweist, und
    - das Licht einer dritten Gruppe von LED ein Wellenlängenmaximum im vom Menschen als grünlich (engl. "*lime*") empfundenen Bereich (L) bei etwa 550 nm $^+/_-$ 30 nm aufweist, wobei das Spektrum der LED dieser Gruppe durch einen Leuchtstoff, wie ein Seltenerdphosphat, verbreitert ist.

6.  Farbabmusterungsleuchte nach Anspruch 5,
    **dadurch gekennzeichnet, dass**
    das Licht einer vierten Gruppe von LED ein Spektrum aufweist, welches vom Menschen als weiß im Sinne der Planck'schen Kurve im CIE-Stimulusdiagramm in der CIE-Normfarbtafel (FT) empfunden wird.

7.  Farbabmusterungsleuchte nach einem der Ansprüche 1 bis 6,
    **dadurch gekennzeichnet, dass**
    eine Steuerungsvorrichtung (10) die in verschiedene Gruppen (B, R, L, W) aufgeteilten LED mit elektrischem Strom versorgt, wobei der Versorgungsstrom jeder Gruppe (B, R, L, W) variierbar ist, wobei mit einem Stellknopf die Lichtfarbe auf der Planck'schen Kurve in der CIE-Normfarbtafel (FT) einstellbar ist.

8.  Farbabmusterungsleuchte nach einem der Ansprüche 1 bis 7,
    **dadurch gekennzeichnet, dass**
    eine Steuerungsvorrichtung (10) die in verschiedene Gruppen aufgeteilten LED mit elektrischem Strom versorgt, wobei der Versorgungsstrom jeder Gruppe (B, R, L, W) variierbar ist, wobei mit einem Stellknopf vorgewählte Lichtfarben einstellbar sind, die

    - entweder durch austasten einer gesamten LED-Gruppe (B, R, L, W)
    - oder durch Schwerpunktsverlagerung der gemeinsamen Lichtfarbe in der CIE-Normfarbtafel (FT)

erzeugt werden.

**Claims**

1. A color matching lamp (1), having

    - LEDs (3) divided into three, four or more different groups having different wavelength ranges (B, R, L, W) of the emitted light, and
    - at least one color mixing device for homogeneous mixing of the light of the LEDs divided into different groups,

    wherein at least one color mixing device is a transparent pane (2), which is provided with a structure on the side (2a) facing away from the viewer, in which structure regions (20a) that are planar and parallel to the plane of the side (2b) facing the viewer alternate with such regions (20b), the plane of which is not parallel to the plane of the side (2b) facing the viewer or is only roughened, **characterized in that**

    - the LEDs (3) divided into different groups (B, R, L, W) are regularly arranged alternately on the side of the transparent pane (2) and irradiate their light into a lateral edge surface (5) of the transparent pane (2) and into a lateral edge surface (5') of the transparent pane (2) opposite this edge surface (5),
    - the local area ratio of the regions (20b) which are not parallel to the side (2b) facing the viewer or only roughened to the regions (20a) parallel to the plane of the side (2b) facing the viewer to the center between the two opposite lateral edge surfaces (5, 5') at which light is irradiated, increases, wherein
    the regions are designed as a hexagon pattern, wherein bordered hexagonal regions (20a) are parallel to the plane of the side (2b) facing the viewer and become ever smaller towards the center between the two opposite lateral edge surfaces (5, 5') at which light is irradiated, and wherein
    the bordering lines (20b) of the hexagonal pattern are roughened or not parallel to the plane of the side (2b) facing the viewer and always have the same width, and
    contiguous surfaces of the regions of the side of the pane facing away from the viewer and structured are smaller than 1 mm$^2$, preferably smaller than 0.25 mm$^2$.

2. The color matching lamp according to claim 1,
    **characterized in that**
    individual LEDs (3) have a distance of at least 1 mm to a maximum of 10 mm from one another, wherein the spectrum of the light between two respectively adjacent LEDs (3) is different.

3. The color matching lamp according to any one of claims 1 to 2,
    **characterized in that**
    the edge length of the transparent pane (2) is at least 40 cm.

4. The color matching lamp according to any one of claims 1 to 3,
    **characterized in that**
    the edges (5, 5') of the transparent pane (2) are covered by a masking, opaque edge cover (4) which protrudes into the surface of the side (2b) facing the viewer between 1 cm and 5 cm, up to a maximum of 8 cm.

5. The color matching lamp according to any one of claims 1 to 4,
    **characterized in that**

    - the light of a first group of LEDs has a wavelength maximum in the range (B) perceived by humans as blue between 460 nm and 490 nm with a peak width at half-height between 5 nm and 50 nm,
    - the light of a second group of LEDs has a wavelength maximum in the range (R) perceived by humans as red between 570 nm and 620 nm with a peak width at half-height between 5 nm and 50 nm, and
    - the light of a third group of LEDs has a wavelength maximum in the region (L) perceived by humans as greenish "lime" at about 550 nm +/-30 nm, wherein the spectrum of the LEDs of this group is broadened by a fluorescent substance, such as a rare earth phosphate.

6. The color matching lamp according to claim 5,
    **characterized in that**
    the light of a fourth group of LEDs has a spectrum perceived by humans as white in the sense of the Planck curve in the CIE stimulus diagram in the CIE chromaticity diagram (FT).

7. The color matching lamp according to any one of claims 1 to 6,
   **characterized in that**
   a control device (10) which supplies the LEDs divided into different groups (B, R, L, W) with electrical current, wherein the supply current of each group (B, R, L, W) is variable, wherein the light color on the Planck curve in the CIE chromaticity diagram (FT) can be adjusted using a control knob.

8. The color matching lamp according to any one of claims 1 to 7,
   **characterized in that**
   a control device (10) which supplies the LEDs divided into different groups with electrical current, wherein the supply current of each group (B, R, L, W) is variable, wherein preselected light colors can be adjusted with a control knob, the colors being generated

   - either by blanking out an entire LED group (B, R, L, W)
   - or by shifting the emphasis of the common light color in the CIE chromaticity diagram (FT).

**Revendications**

1. Lampe d'échantillonnage de couleurs (1), comprenant

   - des LED (3) divisées en trois, quatre ou plusieurs groupes différents avec différentes plages de longueurs d'onde (B, R, L, W) de la lumière émise, et
   - au moins un dispositif de mélange de couleurs pour un mélange homogène de la lumière des LED divisées en différents groupes,

   dans laquelle au moins un dispositif de mélange de couleurs est une vitre transparente (2), qui est pourvue d'une structure sur le côté (2a) opposé à l'observateur, dans laquelle des zones planes (20a) alternent avec de telles zones (20b), dont le niveau n'est pas parallèle au plan au côté tourné vers le spectateur (2b) ou n'est que rugueux,
   **caractérisé en ce que**

   - les LED (3) divisées en différents groupes (B, R, L, W) sont régulièrement disposées en alternance sur le côté de la vitre transparente (2) et leur lumière dans une surface latérale de bord (5) de la vitre transparente (2) et irradient dans une surface de bord (5) opposée à cette surface de bord latérale (5') de la vitre transparente (2),
   - le rapport de zone locale des zones (20b) qui ne sont pas parallèles au plan ou qui ne sont rendues rugueuses que vers l'observateur (2b) sur les surfaces planes parallèles (20a) faisant face à l'observateur (2b) vers le centre entre les deux surfaces de bord latérales opposées (5, 5'), sur lesquelles la lumière est irradiée, va en augmentant, dans laquelle
   les zones sont conçues comme un motif hexagonal, dans laquelle les zones hexagonales bordées (20a) sont parallèles au plan au côté (2b) faisant face à l'observateur et deviennent de plus en plus petites vers le centre entre les deux surfaces de bord latérales opposées (5, 5') au niveau desquelles la lumière est irradiée, et dans laquelle
   les lignes de bordure (20b) du motif hexagonal sont rugueuses ou non parallèles au plan face à l'observateur (2b) et ont toujours la même largeur, et
   les zones contiguës des zones du côté de la vitre opposées à l'observateur et structurées sont inférieures à 1 mm$^2$, de préférence inférieures à 0,25 mm$^2$

2. Lampe d'échantillonnage de couleurs selon la revendication 1,
   **caractérisée en ce que**
   les LED individuelles (3) sont à une distance d'au moins 1 mm à un maximum de 10 mm l'une de l'autre, le spectre de lumière étant différent entre deux LED adjacentes (3).

3. Lampe d'échantillonnage de couleurs selon une des revendications 1 à 2,
   **caractérisée en ce que**
   la longueur du bord du disque transparent (2) est d'au moins 40 cm.

4. Lampe d'échantillonnage de couleurs selon une des revendications 1 à 3,

**caractérisée en ce que**

les bords (5, 5') de la vitre transparente (2) sont recouverts d'un écran de bord opaque de masquage (4) qui fait saillie entre 1 cm et 5 cm, jusqu'à un maximum de 8 cm, dans la surface du côté (2b) faisant face à l'observateur.

5. Lampe d'échantillonnage de couleurs selon une des revendications 1 à 4,
   **caractérisée en ce que**

   - la lumière d'un premier groupe de LED a une longueur d'onde maximale dans la zone (B) perçue par les humains comme bleue entre 460 nm et 490 nm avec une demi-largeur comprise entre 5 nm et 50 nm,
   - la lumière d'un deuxième groupe de LED a une longueur d'onde maximale dans la zone (R) perçue par les humains comme rouge entre 570 nm et 620 nm avec une demi-largeur comprise entre 5 nm et 50 nm, et
   - la lumière d'un troisième groupe de LED a une longueur d'onde maximale dans la plage (L) perçue par les humains comme verdâtre (anglais "lime") à environ 550 nm +/- 30 nm, dans laquelle le spectre des LED de ce groupe est t élargi par un luminophore, tel qu'un phosphate de terre rare.

6. Lampe d'échantillonnage de couleurs selon la revendication 5,
   **caractérisée en ce que**
   la lumière d'un quatrième groupe de LED a un spectre qui est perçu par les humains comme blanc au sens de la courbe de Planck dans le diagramme de stimulation CIE du nuancier standard CIE (FT).

7. Lampe d'échantillonnage de couleurs selon une des revendications 1 à 6,
   **caractérisée en ce que**
   un dispositif de commande (10) alimente la LED divisée en différents groupes (B, R, L, W) en courant électrique, dans laquelle le courant d'alimentation de chaque groupe (B, R, L, W) est variable, dans laquelle
   la couleur de la lumière sur la courbe de Planck peut être définie dans le nuancier standard CIE (FT) avec un bouton de commande.

8. Lampe d'échantillonnage de couleurs selon une des revendications 1 à 7,
   **caractérisée en ce qu'**
   un dispositif de commande (10) alimente la LED divisée en différents groupes en courant électrique, dans laquelle le courant d'alimentation de chaque groupe (B, R, L, W) peut être varié, dans laquelle
   les couleurs de lumière présélectionnées peuvent être définies avec un bouton de commande, qui sont générées

   - soit en masquant tout un groupe de LED (B, R, L, W)
   - soit en décalant le centre de gravité de la couleur de lumière commune dans le nuancier standard CIE (FT).

EP 3 513 156 B1

## Fig. 1

## Fig. 2

BS
RS
LS
WS

KS
KS
KS
KS

10  B, R, L, W

11

# Fig. 3.1

# Fig. 3.2

H

20a
20b

# Fig. 4

# Fig. 5

Fig. 6

**IN DER BESCHREIBUNG AUFGEFÜHRTE DOKUMENTE**

**In der Beschreibung aufgeführte Patentdokumente**

- JP 2010218991 A
- DE 19240201 A1
- US 8592748 B2
- WO 02097324 A1